# EUROPEAN PATENT APPLICATION

(11) **EP 3 648 060 A1**
(43) Date of publication of application: **06.05.2020**
(21) Application number: 18203070.0
(22) Date of filing: 29.10.2018
(51) Int. Cl.: G06T 7/55, G06T 17/00

(54) **3D RAPID PROTOTYPING ON MOBILE DEVICES**

(71) Applicant: Siemens Aktiengesellschaft, 80333 München (DE)
(72) Inventor: Döricht, Volkmar, 80803 München (DE); Ilic, Slobodan, 81547 München (DE)

(57) **Abstract**

The invention relates to a method for generating a 3D model (30) with a mobile device (20). The mobile device (20) is equipped with a camera (21). The 3D model (30) is suited to be used as template for 3D printing of an object. The specimen (10) of the object to be printed is available. The method comprises the following steps:
- taking images of the specimen (10) from various perspectives by means of the camera (21), wherein the position and orientation of the camera (21) is tracked by means of the hardware and software of the mobile device (20),
- generating a depth map of the specimen (10) relative to the camera (21) for each image by means of the software of the mobile device (20),
- creating a signed distance field of the specimen (10) for each depth map, and
- fusing the signed distance fields in order to create the 3D model (30) of the object, wherein the signed distance fields are created and fused by means of the software of the mobile device (20).

## Description

The invention relates to a method for generating a 3D model with a mobile device and the use of such a method to estimate the costs of 3D printing of an object. Furthermore, the invention covers a related computer program product and a related computer-readable storage medium.

The general purpose of the invention is to generate a 3D model of an object which allows to produce the aforementioned object by a 3D printing process.

The 3D printing process is a manufacturing process where material is applied layer by layer and thus three-dimensional objects are generated. It is therefore also called "Additive Manufacturing". In contrast to conventional machining processes, where material is removed from a stock, 3D printing builds a three-dimensional object from a computer-aided design (CAD) model or Additive Manufacturing File (AMF), usually by successively adding material layer by layer.

The dimensions and forms of the object to be printed may thus be specified by a so-called "3D model". This is a perspective illustration of the aforesaid object which can usually be displayed on a screen, for example a computer screen. Typically, the user can vary the perspective and thus view the represented object from different perspectives.

Typically, the 3D model is constructed as a computer-aided design (CAD). This assumes that either the client himself who wants to generate the object with 3D printing has the time and knowledge to produce the 3D model with CAD, or he instructs someone else, e.g. a 3D print provider, to take care of that. Both options are time-consuming and expensive.

A few years ago, first ideas were proposed that make the creation of a model as a template for the 3D print redundant.

In the conference proceedings "2013 IEEE International Conference on Computer Vision (ICCV 2013)" which took place in Sydney, Australia, from the 1st to the 8th of December 2013, Petri Tanskanen, Kalin Kolev, Lorenz Meier, Federico Camposeco, Oliver Saurer and Marc Pollefeys published the article "Live metrics 3D Reconstruction on Mobile Phones". This publication discloses a method which can generate directly and practically in real time a 3D model of an object, a building or a person on a user's mobile device. The position and orientation of the camera is determined by means of an inertial measurement unit (IMU) which combines the measured data of multiple inertial sensors of the mobile device.

In the conference proceedings of the "29th IEEE Conference on Computer Vision and Pattern Recognition Workshops (CVPRW 2016)" which took place in Las Vegas, U.S.A. from June 26th to July 1st of 2016 Oleg Muratov, Yury Slynko, Vitaly Chernov, Maria Lyubimtseva, Artem Shamsuarov and Victor Bucha published the article "3DCapture: 3D Reconstruction for a Smartphone". An inertial measurement unit determines the position and the orientation of the camera during a 360° scan. Thereby, a trajectory of the camera is calculated during the scan of the object. By means of the trajectory of the camera depth maps can be created which are used for the construction of the 3D model in the form of a polygonal network with an overlaid texture.

In their article "SDF-2-SDF Registration for Real-time 3D Reconstruction from RGB-D Data", published in the International Journal of Computer Vision, volume 126, edition 6, pages 615 - 636 in June 2018, Miroslava Slavcheva, Wadim Kehl, Nassir Navab and Slobodan finally proposed the use of the "Signed distance fields" when overlapping the captured depth images of the object for generating the 3D model.

However, a disadvantage of the above-mentioned approaches is the vulnerability of the respective procedures regarding measurement inaccuracy, in particular drift, of the trajectories of the camera. This is due to the fact that the trajectory of the camera is determined by the inertial measurement unit.

Consequently, there exists the need to provide a method for generating an even more precise, more realistic 3D model on a mobile device that is appropriate for the 3D printing.

This problem is solved by the method according to claim 1 and its use according to claim 12, the computer program product according to claim 13 and the computer-readable storage medium according to claim 14. The dependent claims represent advantageous improvements and variations of the invention.

According to the invention, there is provided a method for generating a three-dimensional (3D) model with a mobile device.

In the context of this patent application, "mobile device" comprises advanced mobile phones (also referred to as "smartphones"), which are able to provide access to the internet. Furthermore, "mobile devices" also comprise tablet computers, i.e. mobile computers that are primarily operated by touching the screen.

The mobile device is equipped with a camera, e.g. a red color/ blue color/ green color (RGB) camera. Advantageously, the camera is a rear camera, which facilitates that the user can simultaneously take images and sees the display of the mobile device at the same time.

The 3D model can be used as template for 3D printing of an object.

3D printing is any of various processes in which material is joined or solidified under computer control to create a three-dimensional object, with material being added together such as liquid molecules or powder grains being fused together. 3D printing is used in both rapid prototyping and additive manufacturing. Objects can be of almost any shape or geometry and typically are produced using digital model data from a 3D model or another electronic data source such as an Additive Manufacturing File (AMF) file.

A prerequisite of the present method is that a specimen, i.e. a copy, of the object to be printed is available. The specimen could be a miniaturized, magnified or real-size copy of the object.

The inventive method comprises the following steps:
- Taking images of the specimen from various perspectives by means of the camera, wherein the position and orientation of the camera is tracked by means of the hardware and software of the mobile device;
- Generating a depth map of the specimen relative to the camera for each image by means of the software of the mobile device;
- Creating a signed distance field of the specimen for each depth map; and
- Fusing the signed distance fields to create the 3D model of the object, wherein the signed distance fields are created and fused by means of the software of the mobile device.

These steps are advantageously carried out sequentially and in the order as listed above.

"Taking images" is to be understood in a broad sense throughout this patent application. In particular, this expression includes recording a video wherein the specimen is depicted. This is even a preferred way to take images of the specimen.

The recorded video comprises a plurality of individual images which are analysed and processed, e.g. to create disparity maps.

Tracking of the position and orientation of the mobile device, i.e. particularly of its camera, is carried out by the software and hardware of the mobile device. This could, for instance, be carried out by the camera in combination with the inertial measurement unit (IMU). An inertial measurement unit is an electronic device that measures and reports a body's specific force, angular rate, and sometimes the magnetic field surrounding the body, using a combination of accelerometers and gyroscopes, sometimes also magnetometers. IMU's are typically used to manoeuvre aircraft, including unmanned aerial vehicles. Possibly, IMU's may also be contained in consumer end product mobile devices, which would allow a more accurate tracking of the mobile device's camera.

Use of IMU becomes advantageous when combined with visual odometry (camera tracking from images in a video). Combining IMU and camera images to track the position and orientation of the mobile device is known as inertial visual odometry (IVO). Inertial visual odometry combines standard visual odometry, which is in robotics and computer vision referred to as the process of determining the position and orientation of a robot by analyzing the associated camera images, with inertial information. This results in an unprecedentedly accurate estimation about the actual motion of the mobile device, which leads to a minimum drift of the tracked position and a high convergence between the estimated and real position of the mobile device.

Regarding the generation of depth maps of the specimen, there exist at least the following three options:
First, the camera of the mobile device may not only comprise a "standard" camera for taking images of the specimen (e.g. an RGB camera), but also a depth camera. The depth camera itself may contain a projector and an infrared camera coupled with the RGB camera. The advantage of having a depth camera already included in the camera is that no depth maps need to be generated via disparity maps but are provided straight away.

Second, the camera may be a stereo camera and the depth map may then be obtained from a disparity map, which is based on one image taken from the stereo camera. A stereo camera has two or more lenses with a separate image sensor or film frame for each lens. An advantage of stereo cameras is that the calibrated setup of the stereo camera pair allows better disparity map computations per frame. The tracking can be also improved if stereo cameras are used instead of one camera. In principle, the proposed method stays the same and the disparity maps made from pairs of video frames will be replaced with the real stereo disparity maps.

Third, the camera is simply a camera which is able to take images (including recording a video) from the specimen of interest. Then, the depth map is obtained from a disparity map, which is based on two images of the camera taken from two different perspectives.

"Images" are also referred to as "frames" in this context.

The disparity maps are advantageously obtained by comparing and processing two consecutively recorded frames. Based on the disparity maps, a depth map is obtained for each disparity map (hence for each pair of images, or frames).

A challenge for many object recognition or reconstruction methods is to distinguish between the object of interest (here the specimen based on which the 3D model is created) and the environment, in other words surroundings or background, of the object.

To give a concrete example, assume a specimen, e.g. a screw, being placed on a table top. The task is to create a 3D model of the screw for the purpose of 3D printing. A depth map of the screw is generated, either by directly recording the depth map by a depth camera, or by calculating the depth map from a disparity map, which had been obtained from two images of the screw taken from slightly different perspectives.

The challenge is to only reconstruct the screw without including any part of the table top. This can be achieved by masking the foreground pixels belonging to the screw and ignoring all background pixels belonging to the table top. This could be done by simple depth pixel thresholding, but pixels belonging to the table top nearby the screw would be retained. This drawback can be overcome by performing initial background subtraction in the first frame, then transferring the object foreground mask to each new frame with the given camera pose, and updating the background model that will be used for the background subtraction in the current frame. In this way segmented foreground object disparity maps will be obtained, which can subsequently be fused via signed distance fields (SDFs) into the 3D object volume.

In this context, in order to have more robust camera tracking through IVO, the environment should advantageously be changed by adding simple texture to the background. This can be done by placing the specimen of interest on a textured piece of paper. This can increase the accuracy and stability of the tracking.

Generally, either the object can be immobile with respect to the background and the camera moves around the object, or the camera is on a fixed place and the object moves, e.g. rotates, with respect to e.g. the table top upon which it is placed.

In both cases, it is beneficial if the camera moves with regard to the specimen in an angle of at least 360 degrees. This is also referred to as performing a closed loop around the specimen of interest. When closing the loop, the scanning process can be automatically stopped, and the 3D model can be globally optimized by additionally refining the model geometry via optimizing the camera poses. This might be necessary in case a small drift during tracking appears which in practice is usually inevitable.

The invention is also directed towards the use of the method to estimate the costs of 3D printing the object. This means that the 3D model may not necessarily be really used for 3D printing of the object but may only be taken to estimate the time and/or costs of hypothetically do the 3D print. This could be a realistic request from customers who have a specimen which they consider to be printed one or several times via 3D printing but for which they are yet undecided because of lack of knowledge regarding the printing time and costs. In these cases, it may even be sufficient to have a rough 3D model to make the mentioned estimations instead of a refined, detailed 3D model which would be required for a highly detailed 3D print.

Finally, the invention is also directed to a computer program product comprising instructions which, when the program is executed by a computer, cause the computer to carry out the steps of the method as described above.

Likewise, the invention is also directed to a computer-readable storage medium comprising instructions which, when executed by a computer, cause the computer to carry out the steps of the method as described above.

Embodiments of the invention are now described, by way of example only, with the help of the accompanying drawing, of which:

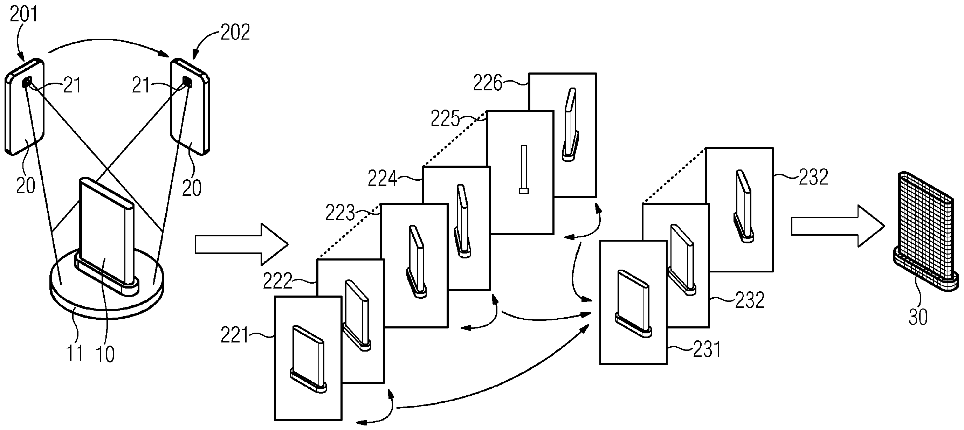

- Figure 1: shows the inventive method by the example of reconstructing a gas turbine blade by using a mobile device only.

Figure 1 illustrates, from left to right, the process of reconstructing a specimen 10, here exemplarily a blade of a gas turbine, by using a mobile device 20 only.

The specimen 10 is placed on a table top 11. During the process, the specimen 10 will not move with regard to the table top 11. The table top 11 and the surroundings (not shown in the drawing) represent the background; the specimen 10 represents the foreground.

A mobile device 20, here exemplarily a smartphone with a standard RGB camera 21 on its rear side, is moved slowly around the specimen 10. Images are continuously taken during the movement of the mobile device 20 around the specimen 10. As a result, images of the specimen 10 and the background from various different perspectives are obtained.

In Figure 1 the mobile device 20 is shown in a first position (left, 201) and in a second position (right, 202). Movement of the mobile device 20 from the first into the second position 201, 202 is symbolized by the curved arrow between the two positions 201, 202. In both positions 201, 202 (and in many more positions which are not illustrated in the drawing for sake of clarity), images of the specimen 10 are taken.

These images are subsequently "segmented". This means that all pixels belonging to the specimen 10 are retained, while all other pixels, which belong to the background, are discarded. There exist various automated methods how to achieve this aim. As a result, a plurality of segmented images of the specimen 10 are obtained. Concretely speaking, a first segmented image 221 represents the specimen 10 from a first perspective, a second segmented image 222 represents the specimen 10 from a second perspective (the second perspective is almost equal, but slightly rotated to the first perspective), a third segmented image 223 represents the specimen 10 from a third perspective, a fourth segmented image 224 represents the specimen 10 from a fourth perspective, a fifth segmented image 225 represents the specimen 10 from a fifth perspective, and a sixth segmented image 226 represents the specimen 10 from a sixth perspective.

In the following, two adjacent images are processed to generate a corresponding disparity map.

In traditional stereo vision, two cameras, displaced horizontally from one another, are used to obtain two differing views on a scene, in a manner similar to human binocular vision. By comparing these two images, the relative depth information can be obtained in the form of a disparity map, which encodes the difference in horizontal coordinates of corresponding image points. The values in this disparity map are inversely proportional to the scene depth at the corresponding pixel location.

For a human to compare the two images, they must be superimposed in a stereoscopic device, with the image from the right camera being shown to the observer's right eye and from the left one to the left eye.

In a computer vision system, several pre-processing steps are required:
1. The image must first be undistorted, such that barrel distortion and tangential distortion are removed. This ensures that the observed image matches the projection of an ideal pinhole camera.
2. The image must be projected back to a common plane to allow comparison of the image pairs, known as image rectification.
3. An information measure which compares the two images is minimized. This gives the best estimate of the position of features in the two images and creates a disparity map.
4. Optionally, the received disparity map is projected into a 3D point cloud. By utilising the cameras' projective parameters, the point cloud can be computed such that it provides measurements at a known scale.

Here, the first and second segmented image 221, 222 are computed to build a first disparity map 231; the third and fourth segmented image 223, 224 are computed to build a second disparity map 232; and the fifth and sixth segmented image 225, 226 are taken to build a third disparity map 233. These disparity maps are subsequently fused via signed distance fields to the 3D object volume, which gives a representation of the specimen 10, namely the 3D model 30. Note that by loop closure the 3D model 30 can be further improved and refined, if necessary.

## Claims

1. Method for generating a 3D model (30) with a mobile device (20),
wherein
- the mobile device (20) is equipped with a camera (21),
- the 3D model (30) is suited to be used as template for 3D printing of an object, and
- a specimen (10) of the object to be printed is available,
and wherein the method comprises the following steps:
- taking images of the specimen (10) from various perspectives by means of the camera (21), wherein the position and orientation of the camera (21) is tracked by means of the hardware and software of the mobile device (20),
- generating a depth map of the specimen (10) relative to the camera (21) for each image by means of the software of the mobile device (20),
- creating a signed distance field of the specimen (10) for each depth map, and
- fusing the signed distance fields in order to create the 3D model (30) of the object, wherein the signed distance fields are created and fused by means of the software of the mobile device (20).

2. Method according to claim 1,
wherein the depth map is obtained from a disparity map, which is based on two images of the camera (21) taken from two different perspectives.

3. Method according to claim 1,
wherein the camera (21) is a stereo camera and the depth map is obtained from a disparity map, which is based on one image taken from the stereo camera.

4. Method according to claim 1,
wherein the camera (21) comprises a depth camera, such that the depth map is recorded directly by the camera (21).

5. Method according to one of the preceding claims,
wherein the position and orientation of the camera (21) is tracked by inertial visual odometry.

6. Method according to one of the preceding claims,
wherein
- in the first image initial background subtraction is carried out,
- the specimen foreground mask is transferred to each new image including the given camera pose, and
- the background model which is used for background subtraction is continuously updated.

7. Method according to one of the preceding claims,
wherein the specimen (10) is arranged before a textured background.

8. Method according to one of the preceding claims,
wherein the specimen (10) is immobile with regard to the background and moves with regard to the camera (21).

9. Method according to one of the preceding claims,
wherein the camera (21) moves with regard to the specimen (10) in an angle of at least 360°.

10. Method according to claim 9,
wherein
- a loop closing image, which is taken after movement of the camera (21) about 360° with regard to the specimen (10), is compared to first image, and
- the loop closing image is corrected if it differs to a predefined extent from the first image.

11. Use of a method according to one of the preceding claims to estimate the costs of 3D printing the object.

12. Computer program product comprising instructions which, when the program is executed by a computer, cause the computer to carry out the steps of the method according to one of the claims 1 to 10.

13. A computer-readable storage medium comprising instructions which, when executed by a computer, cause the computer to carry out the steps of the method according to one of the claims 1 to 10.
